# EUROPEAN PATENT APPLICATION

(11) **EP 2 570 614 A2**
(43) Date of publication of application: **20.03.2013**
(21) Application number: 12182906.3
(22) Date of filing: 04.09.2012
(51) Int. Cl.: F01D 11/02, F01D 25/22, F16C 32/06

(54) **Air cushion seal**

(30) Priority: 19.09.2011 GB 201116121
(71) Applicant: Rolls-Royce plc, London SW1E 6AT (GB)
(72) Inventor: Davies, Christopher, Eggington, Derbyshire DE65 6HQ (GB); Jahn, Ingo Henry Johannes, West End, Queensland 4101 (AU)
(74) Representative: Gee, Philip David

(57) **Abstract**

A fluid-riding seal 2 comprising first and second components 4, 6 that are arranged for rotation with respect to each other about a nominal rotational axis 8, the first and second components 4, 6 comprising respective first and second axial sealing surfaces 10, 16 which oppose each other and are spaced apart in the direction of the rotational axis 8 so as to define a gap between the sealing surfaces 10, 16, wherein a portion 32 of the first sealing surface 10 is curved.

## Description

This invention relates to a fluid-riding device, and is particularly, although not exclusively, concerned with a fluid-riding seal.

Fluid-riding seals, for example air-riding seals, are often used in multi-stage turbine engines to seal against driveshafts which extend through multiple stages. The seals prevent or reduce leakage between the stages of the turbine engine through regions adjacent the driveshaft.

Air-riding seals typically comprise two spaced apart annular rings arranged to rotate with respect to each other. Each ring has a flat sealing surface that is normal to the rotational axis of the seal. The sealing surfaces oppose each other and are substantially parallel.

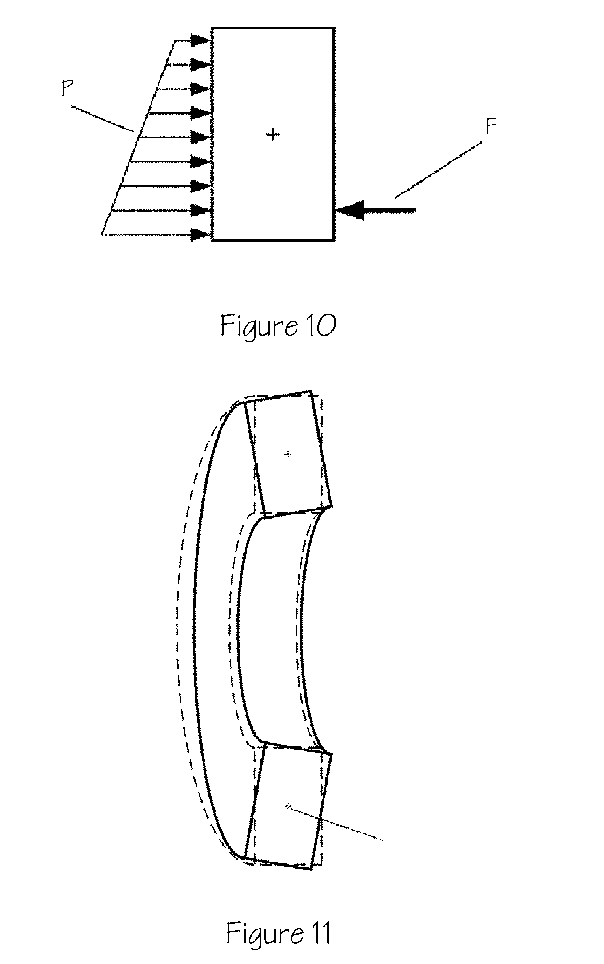

In use, a cushion or film of air is generated between the sealing surfaces to prevent contact between the surfaces. The sealing surfaces thus slide over each other on the cushion of air. The cushion of air between the two surfaces maintains the gap between the sealing surfaces and keeps the sealing surfaces aligned. The performance of the seal is sensitive to the width of the gap and the alignment of the sealing surfaces. Consequently, misalignment of the surfaces, such as misalignments caused by small setting errors between the annular rings, can severely compromise the performance of the seal. For example, Figures 10 and 11 depict one of the annular rings being pressed by a support ring. Figure 10 is a sectional view of the annular ring being pressed at its radially inner periphery towards the other annular ring (not shown). The combination of the applied pressing force (F), centrifugal forces and a radial variation in the pressure profile (P) between the sealing surfaces of the annular rings causes an unbalanced moment to act on the supported ring. The unbalanced moment causes the ring to rotate (i.e. twist) about its toroidal axis as shown in solid outline in Figure 11. The toroidal axis is a circular axis which extends circumferentially with respect to the ring. The twist reduces the width of the radially inner region of the gap thereby causing axisymmetric coning of the gap which adversely affects operation of the seal. Furthermore, the cushion of air between the sealing surfaces is inherently unstable which means that even small deviations in the alignment of the annular rings can disrupt the cushion of air causing the sealing surfaces to collapse towards each other.

There is therefore the need for an improved fluid-riding seal.

According to a first aspect of the invention there is provided a fluid-riding seal comprising first and second components that are arranged for rotation with respect to each other about a nominal rotational axis, the first and second components comprising respective first and second axial sealing surfaces which oppose each other and are spaced apart in the direction of the rotational axis so as to define a gap between the sealing surfaces having a predetermined radial profile, wherein a portion of the first sealing surface defining the radial profile is curved.

At least one of the first and second components may be an annular component having a toroidal axis, said first sealing surface being curved such that the predetermined radial profile is substantially maintained when said annular component is rotated about its toroidal axis.

The curved portion of the first sealing surface may be curved such that the predetermined radial profile is substantially maintained when the first component is inclined with respect to the second component in a plane in which the nominal rotational axis extends.

The first sealing surface may be annular having an inner circumferential edge and an outer circumferential edge.

The curved portion may extend radially outwardly from the inner circumferential edge of the first sealing surface.

The width of at least part of the predetermined profile may reduce in a radially inward direction with respect to the rotational axis.

The curved portion may extend radially inwardly from the outer circumferential edge of the first sealing surface.

The width of at least part of the predetermined profile may reduce in a radially outward direction with respect to the rotational axis.

The curved portion may extend from the outer circumferential edge to the inner circumferential edge of the first sealing surface. The curved portion may be convex. The curved portion may have a constant radius of curvature.

The radius of curvature may be such that the curved portion is displaced in a plane which is coextensive with the plane in which the curved portion extends when the first component is inclined with respect to the second component.

The portion of the second sealing surface which opposes the curved portion of the first sealing surface may be flat and extend tangentially with respect to the curved portion.

The portion of the second sealing surface which opposes the curved portion of the first sealing surface may be concave.

According to a second aspect of the invention there is provided a fluid-riding bearing comprising first and second components that are arranged for rotation with respect to each other about a nominal rotational axis, the first and second components comprising respective first and second axial bearing surfaces which oppose each other and are spaced apart in the direction of the rotational axis so as to define a gap between the bearing surfaces having a predetermined radial profile, wherein a portion of at least one of the bearing surfaces is curved.

For a better understanding of the present invention, and to show more clearly how it may be carried into effect, reference will now be made, by way of example, to the accompanying drawings, in which:-
Figure 1 is an axial view of a fluid-riding seal;
Figure 2 is a partial view in section of the fluid-riding seal shown in Figure 1 along line 11-11;
Figure 3 is a partial view in section of the fluid riding seal shown in Figures 1 and 2 in which parts of the seal are misaligned;
Figure 4 is a partial view in section of a variant of a fluid riding seal;
Figure 5 is a partial view in section of a second variant of a fluid riding seal;
Figure 6 is a partial view in section of a third variant of a fluid riding seal;
Figure 7 is a partial view in section of the third variant shown in Figure 6;
Figure 8 is a partial view in section of a fourth variant of a fluid riding seal;
Figure 9 is a partial view in section of a fifth variant of a fluid riding seal;
Figure 10 is a partial view in section of a component of an air-riding seal with forces acting on the air-riding seal depicted; and
Figure 11 shows deformation of the component shown in Figure 10 under forces depicted in Figure 10.

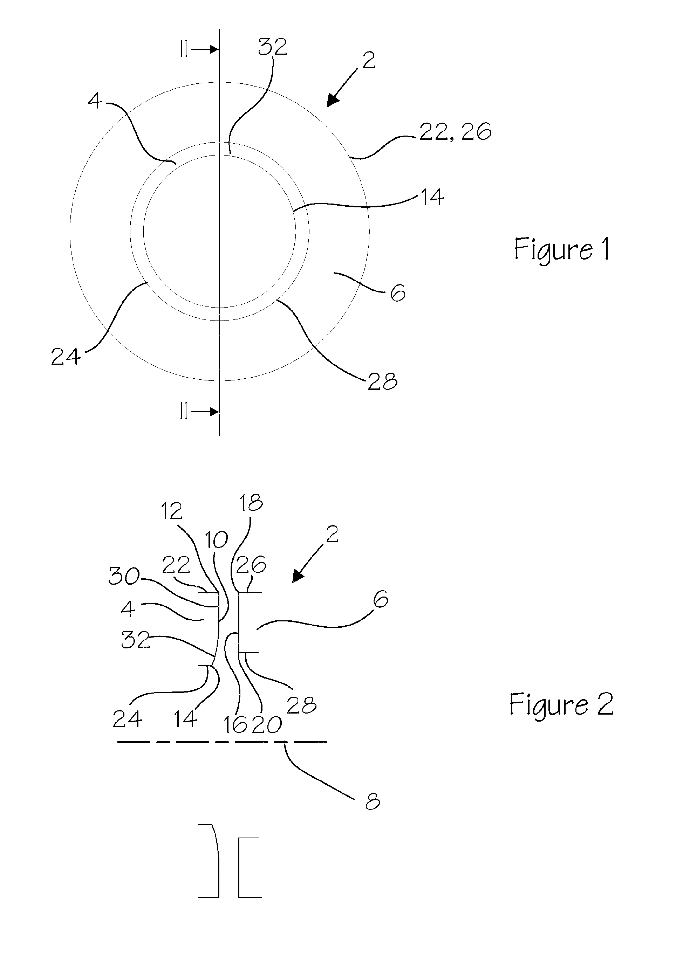

**Figures 1 and 2** show a fluid-riding seal 2 comprising a rotor 4 and a stator 6. The rotor 4 is arranged for rotation with respect to the stator 6 about a nominal rotational axis 8. The rotor 4 and the stator 6 are annular.

The rotor 4 has a first axial sealing surface 10 extending between a radially outer edge 12 and a radially inner edge 14 of the rotor 4. The stator 6 has a second axial sealing surface 16 which extends between a radially outer edge 18 and a radially inner edge 20 of the stator 6. The rotor 4 and stator 6 are arranged so that the first and second axial sealing surfaces 10, 16 oppose each other in the direction of the nominal rotational axis 8. The first and second sealing surfaces 10, 16 are spaced apart from each other to define a gap between the sealing surfaces 10, 16.

The first sealing surface 10 overhangs the second sealing surface 16 such that the inner edge 14 of the rotor 4 is radially inward of the inner edge 20 of the stator 6.

The rotor 4 and stator 6 have respective outer 22, 26 and inner 24, 28 circumferential surfaces which extend away from the respective radially outer edges 12, 18 and radially inner edges 14, 20 parallel to the rotational axis 8. The radially outer surfaces 22, 26 of the rotor 4 and the stator 6 extend in a common circumferential plane. The radially inner surface 24 of the rotor 4 extends in a circumferential plane which is radially inward of the circumferential plane in which the radially inner surface 28 of the stator 6 extends.

The first sealing surface 10 comprise a flat portion 30 and a curved portion 32. The curved portion 32 is convex and extends from the radially inner edge 14 towards the second sealing surface 16 and converges with a plane normal to the rotational axis 8. The flat portion 20 extends radially outwardly from the curved portion 32 to the radially outer edge 12 in the plane which is normal to the rotational axis 8.

The curved portion 32 defines a gap between the first and second sealing surfaces 10, 16 which converges in a radially outward direction. The curved portion 32 may have a constant radius of curvature. The radius of curvature is defined so that angular misalignment between the rotor 4 and the stator 6 with respect to the rotational axis 8 or misalignment caused by rotation (i.e. twisting) of the rotor 4 about a toroidal axis displaces the curved portion 32 along the plane defined by the curved portion 32. The radial profile of the gap, in particular the radial variation of the width of the gap between the curved portion 32 and the second sealing surface 16, is therefore the same whether the rotor 4 and stator 6 are aligned or misaligned.

In use, a fluid, such as air, is fed under pressure between the first and second sealing surfaces 10, 16. Where the seal 2 is used for high-speed rotating components, air enters the seal through the radially inner edges 14, 20 and the centrifugal force acting on the air forces the air to flow through the seal 2 in a radially outward direction. The flow generates a cushion of air which generates hydrodynamic and hydrostatic lift to maintain the gap between the sealing surfaces 10, 16. This effect may be augmented by the presence of lift generating features (not shown) on the either or both sealing surfaces 10, 16. As hydrodynamic forces only exist in small gaps and as they are strongly affected by the radial gap profile, maintaining the radial gap profile between the two elements for all operating conditions ensures improved performance of the seal.

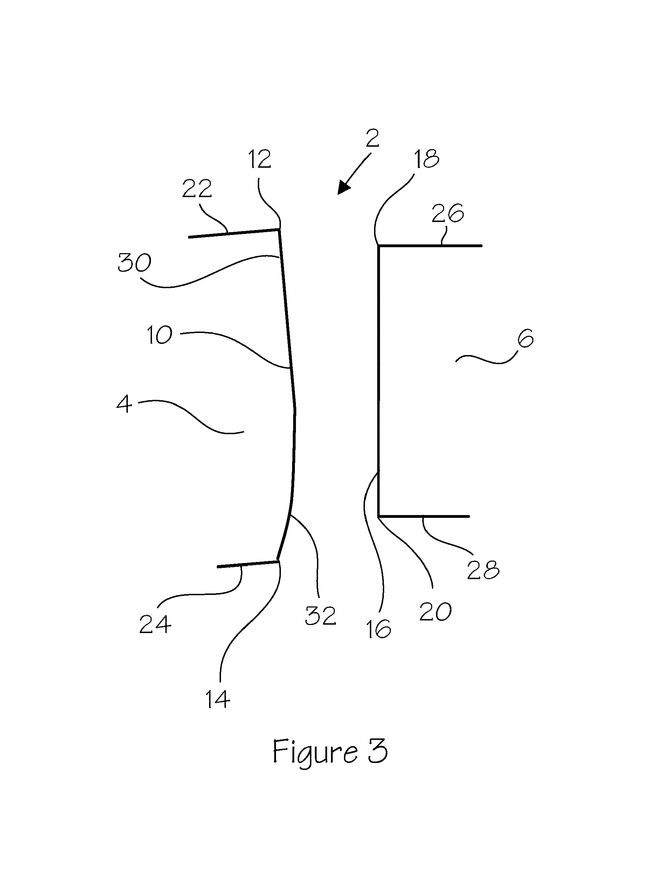

**Figure 3** shows the rotor 4 inclined at an angle to the nominal rotational axis 8. This can occur through misalignment of the rotor 4 with the stator 6 on assembly, dynamic misalignments during operation, for example misalignments caused by rotor imbalance or resonance, or can occur because of toroidal rotation of either element due to static and dynamic loads on the rotor 4 and/or stator 6 . The first sealing surface 10 is pivoted with respect to the second sealing surface 16 so that the flat portion 30 is inclined to the second sealing surface 16. The radius of curvature of the curved portion 32 may be approximately equal to the radial distance of the curved portion 32 to the point about which the rotor 4 is inclined. The curved portion 32 is therefore displaced substantially in its own plane. Consequently, the distance between the curved portion 32 and the second surface 16 remains substantially constant so that the profile of the gap between the curved portion 32 and the second sealing surface 16 remains substantially unchanged around the entire perimeter of the seal 2. Deterioration in the performance of the seal 2 due to angular misalignments or toroidal rotations is therefore mitigated and the likelihood of collapse of the seal diminished. The seal 2 is thus more tolerant, or de-sensitised, to angular misalignments or toroidal rotations. The embodiment shown in **Figures 1 to 3** is particularly suitable for maintaining the width of the gap between the sealing surfaces in the region adjacent the radially inner edges 14, 20.

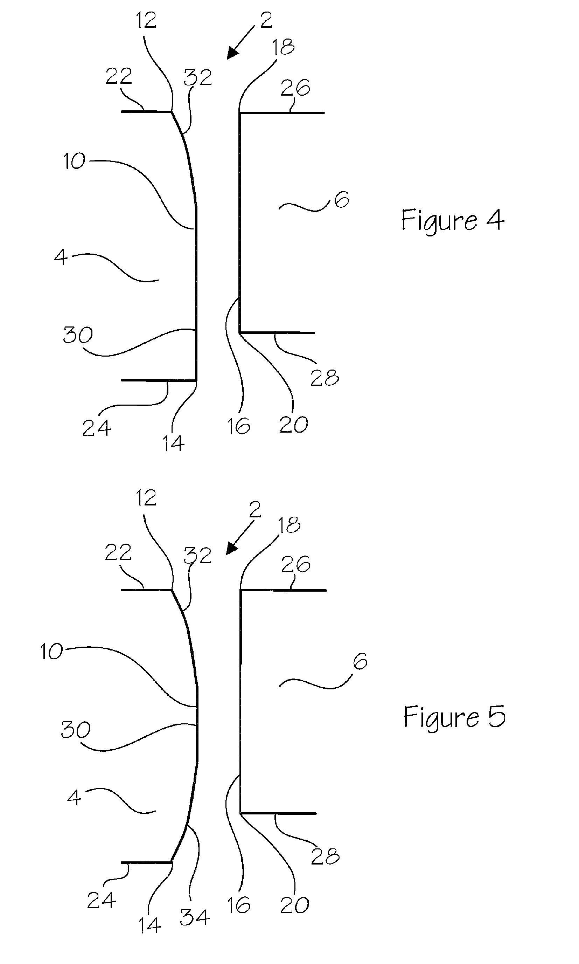

**Figure 4** shows a variant of the seal 2 in which the curved portion 32 extends radially inwardly from the radially outer edge 12 of the rotor 4. This variant is particularly suitable for maintaining the width of the gap between the sealing surfaces in the region adjacent the radially outer edges 12, 18.

**Figure 5** shows a variant of the seal 2 in which curved portions 32, 34 extend from both the inner and outer radial edges 12, 18, 14, 20. This variant is suitable for maintaining the width of the gap between the sealing surfaces in the regions adjacent the radially outer edges 12, 18 and the radially inner edges 14, 20.

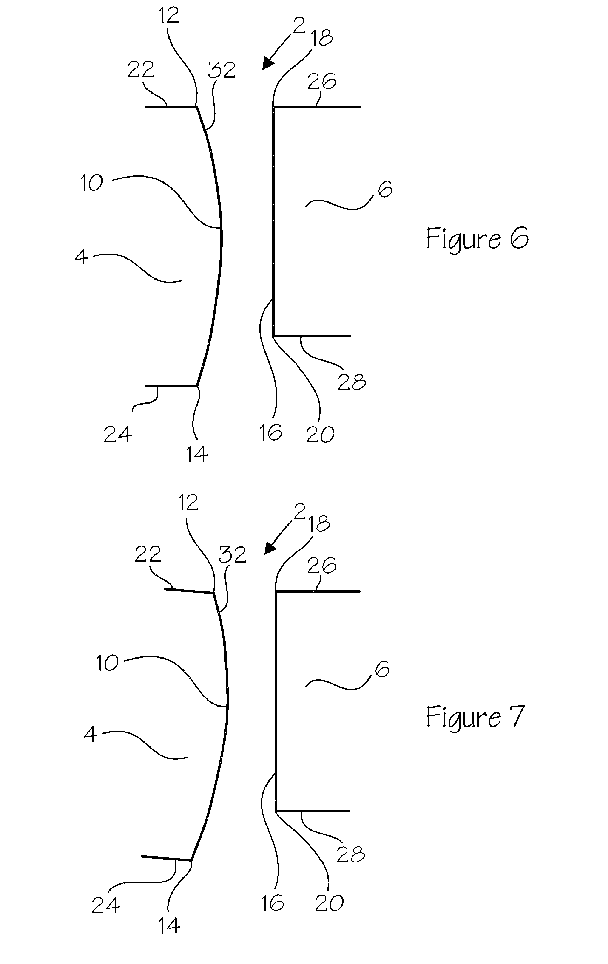

**Figure 6** shows a variant in which the curved portion 32 extends from the radially outer edge 12 to the radially inner edge 14 of the rotor 4. As shown in **Figure 7****,** this variant ensures that the minimum width of the gap midway between the radially inner and outer edges 12, 18, 14, 20 is substantially maintained at all angles of misalignment.

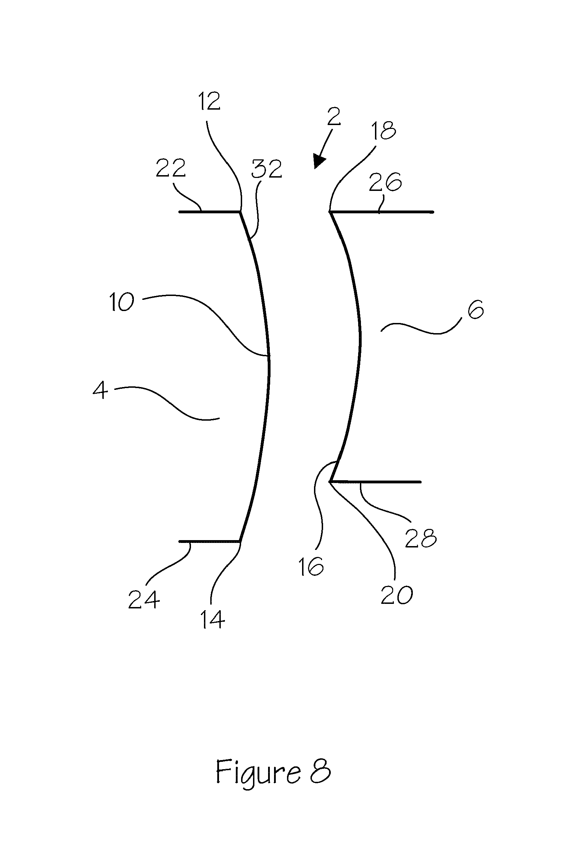

**Figure 8** shows a variant similar to that shown in **Figures 6 and 7** in which the second sealing surface 16 of the stator 6 is curved between the radially inner and outer edges 18, 20. The second sealing surface 16 is concave and curved such the first and second sealing surfaces 10, 16 define a gap having a radial profile which is maintained when the rotor 4 and stator 6 are misaligned or when either rotate about their respective toroidal axis. It will be appreciated that although it may be preferable for the first and second sealing surfaces 10, 16 to have identical curvatures such that they define a gap having a radial profile of constant width, the first and second sealing surfaces 10, 16 may have different curvatures.

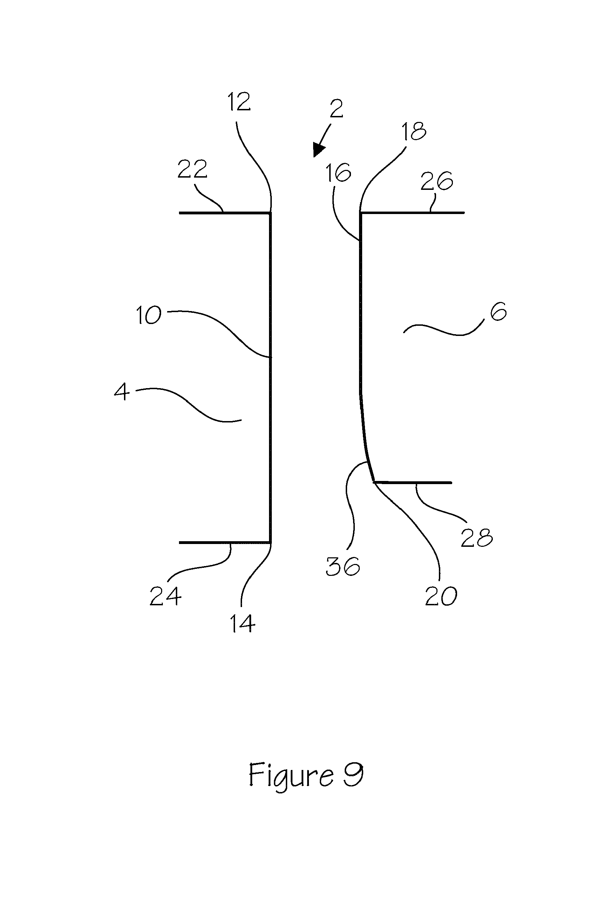

**Figure 9** shows a variant in which the first sealing surface 10 of the rotor 4 is flat and the second sealing surface 16 of the stator 6 has a concave curved portion 34 extending radially outwardly from the radially inner edge 20. This variant is particularly suitable for maintaining the width of the gap between the sealing surfaces in the region adjacent the radially inner edges 14, 20.

It will be appreciated that variants described above could be applied equally to the first or second sealing surface 10, 16.

The curvature of each sealing surfaces or both sealing surfaces can be constant, quadratic, polynomial or vary non-linearly in an ad hoc manner such that the profile of the gap between the sealing surfaces is not adversely affected by misalignment or toroidal rotation.

The invention could also be applied to any type of fluid sealing devices, for example air-air, air-oil and air-vapour.

The invention could also be applied to an air-riding seal used in an intershaft sealing arrangement, where sealing between two rotating shafts is required. For such an application the components previously described as being static are mounted to one of the shafts and they are rotated. The first and second axial sealing faces are therefore provided on respective rotatable shafts.

The invention may also be applied to axial thrust air bearings in which hydrodynamic lift generated between two bearing surfaces which rotate with respect to each other is used to support an axial load acting on the bearing. This may be particularly advantageous for bearings in which the higher loads can cause large deformations and misalignment of the stator and runner component. In such circumstances, maintaining of the radial profile of the gap between the bearing surfaces thereby de-sensitising the radial gap profile is important to ensure that the bearing can operate properly. The above-mentioned features relating to the sealing surfaces and the radial profile of the gap defined between the sealing surfaces of the fluid-riding seal may be incorporated into the bearing surfaces and the gap defined between them.

## Claims

1. A fluid-riding seal (2) comprising first (4) and second (6) components that are arranged for rotation with respect to each other about a nominal rotational axis (8), the first and second components comprising respective first (10) and second (16) axial sealing surfaces which oppose each other and are spaced apart in the direction of the rotational axis so as to define a gap between the sealing surfaces having a predetermined radial profile, wherein a portion (32) of the first sealing surface defining the radial profile is curved.

2. A fluid-riding seal as claimed in claim 1, wherein at least one of the first and second components is an annular component having a toroidal axis, said first sealing surface being curved such that the predetermined radial profile is substantially maintained when said annular component is rotated about its toroidal axis.

3. A fluid-riding seal as claimed in claim 1, wherein the curved portion of the first sealing surface is curved such that the predetermined radial profile is substantially maintained when the first component is inclined with respect to the second component in a plane in which the nominal rotational axis extends.

4. A fluid-riding seal as claimed in claim 2 or 3, wherein the first sealing surface is annular having an inner circumferential edge (14) and an outer circumferential edge (12).

5. A fluid-riding seal as claimed in claim 4, wherein the curved portion extends radially outwardly from the inner circumferential edge of the first sealing surface.

6. A fluid-riding seal as claimed in claim 5, wherein the width of at least part of the predetermined profile reduces in a radially inward direction with respect to the rotational axis.

7. A fluid-riding seal as claimed in any one of claims 4 to 6, wherein the curved portion extends radially inwardly from the outer circumferential edge of the first sealing surface.

8. A fluid-riding seal as claimed in claim 7, wherein the width of at least part of the predetermined profile reduces in a radially outward direction with respect to the rotational axis.

9. A fluid-riding seal as claimed in claim 7 or 8, wherein the curved portion extends from the outer circumferential edge to the inner circumferential edge of the first sealing surface.

10. A fluid-riding seal as claimed in any one of the preceding claims, wherein the curved portion is convex.

11. A fluid-riding seal as claimed in any one of the preceding claims, wherein the curved portion has a constant radius of curvature.

12. A fluid-riding seal as claimed in claim 11, wherein the radius of curvature is such that the curved portion is displaced in a plane which is coextensive with the plane in which the curved portion extends when the first component is inclined with respect to the second component.

13. A fluid-riding seal as claimed in any one of claims 1 to 12, wherein the portion of the second sealing surface which opposes the curved portion of the first sealing surface is flat and extends tangentially with respect to the curved portion.

14. A fluid-riding seal as claimed in any one of claims 1 to 12, wherein the portion of the second sealing surface which opposes the curved portion of the first sealing surface is concave.

15. A fluid-riding bearing comprising first and second components that are arranged for rotation with respect to each other about a nominal rotational axis, the first and second components comprising respective first and second axial bearing surfaces which oppose each other and are spaced apart in the direction of the rotational axis so as to define a gap between the bearing surfaces having a predetermined radial profile, wherein a portion of at least one of the bearing surfaces is curved.
